# EUROPEAN PATENT SPECIFICATION

(11) **EP 2 010 820 B1**
(45) Date of publication and mention of the grant of the patent: **17.05.2017**
(21) Application number: 07748345.1
(22) Date of filing: 16.03.2007
(51) Int. Cl.: F22B 1/22, A62C 3/06, E21B 35/00, E21B 43/243, F01K 21/04, F02C 3/30, A62C 99/00, E21B 43/24, F02C 6/04, F02C 6/18, F22B 1/18, A62C 3/02

(54) **METHOD FOR PRODUCING A GASEOUS MEDIUM COMPRISING STEAM**
VERFAHREN ZUR HERSTELLUNG EINES DAMPF ENTHALTENDEN GASFÖRMIGEN MEDIUMS
PROCÉDÉ DE PRODUCTION D'UN MÉLANGE GAZEUX COMPORTANT DE LA VAPEUR

(30) Priority: 30.03.2006 SE 0600717
(43) Date of publication of application: 07.01.2009
(73) Proprietor: Steamex Group Sverige AB, 167 71 Bromma (SE)
(72) Inventor: Abrahamsson, Michael, 185 93 Vaxholm (SE)
(74) Representative: Novitas Patent AB
(86) International application number: PCT/SE2007/050169
(87) International publication number: WO 2007/114775

(56) References cited:
- WO-A1-97/43581
- WO-A1-2004/005797
- WO-A1-2005/012818
- WO-A1-2005/012818
- DE-C- 114 510
- GB-A- 821 467
- US-A- 3 756 029
- US-A- 3 980 137
- US-A- 4 099 572
- US-A- 4 380 267
- US-A- 4 397 356
- US-A- 4 442 898
- US-A- 4 580 504
- US-A- 4 678 039
- US-A- 5 054 279
- US-A- 5 165 483

## Description

### TECHNICAL FIELD

The present invention relates to a method for producing a gaseous medium comprising steam according to the preamble of claims 1.

### BACKGROUND

WO 2005/012818 discloses a method, a device and a system for heating by means of a gaseous medium comprising steam, said steam being produced from water, energy for heating the water being provided by burning a fuel, wherein the steam is mixed with exhaust gas from the combustion of said gaseous medium; and wherein said mixture is used for heating purposes.

Coal mines usually have two shafts and are located deep under ground, constituting large spaces or cavities. A problem occurs when there is a fire in a coal mine, caused e.g. by a gas explosion or the like. The fire is extremely difficult to extinguish, as it is not possible/extremely hazardous to enter the mine where the fire is. Oxygen from the air above ground is sucked into the mine by the fire, thus feeding the fire such that the fire continuously burns. There are examples of coal mines burning for several years and mines that are still burning. There is thus no satisfactory method for solving this problem today.

When there is an oil fire in an oil storage tank a similar problem of extinguishing fire occurs.

Shale oil lies under ground as bitumen. There are two known ways of extracting the oil. Either by open cut mine or by heating up the oil sand or by heating up or diluting the oil sand so that it becomes sufficiently fluid to be pumped up.

Both methods have major environmental disadvantages. Open cut mines require that two tons of tar sand is dug up for each barrel (159 litre) of oil produced. Only one fifth of the reserves of oil shale can be extracted with this technique. An army of trucks, trenching machines and bulldozers, which themselves require a lot of energy, are needed in order to excavate an area of the size of a large football ground every second day. After having extracted the shale oil the same operation is needed to fill up the open cut mine and restore nature. By using steam or chemicals for making the bitumen fluid, large risks for damaging the ground water appear. In order to extract shale oil in shale oil reserves using steam, steam is injected into the ground in order to heat up the bitumen, which then becomes fairly liquid and can be retrieved. The steam is produced by large generators, which require a lot of electrical power, making the oil very expensive. WO 2005/012818 discloses a suggestion of introducing a steam and exhaust gas mixture into the ground in order to extract the oil. This might be a good and more efficient solution, however when the oil sand is located deep under ground there may be problems transporting the mixture and preserving the energy.

A general problem with gas turbines is the cooling thereof due to high temperatures of e.g. 1300 °C. There exist solutions where the exhaust gas produced during operation is used to cool the gas turbine. This is however not very efficient.

### OBJECTS OF THE INVENTION

An object of the present invention is to provide a method for producing a gaseous medium comprising steam which is efficient

### SUMMARY OF THE INVENTION

These and other objects, apparent from the following description, are achieved by the method for producing a gaseous medium comprising steam, and which exhibits the features recited in the characterising clause of the appended claim 1. Preferred embodiments of the inventive method are defined in appended sub claims 2-4.

By providing a method for producing a gaseous medium comprising steam, said steam being produced from a first fluid medium, energy for heating the first fluid medium being provided by burning a fuel, comprising the steps of mixing the steam with exhaust gas from combustion of said fuel, characterised by the step of prior to mixing the steam with exhaust gas, injecting fluid into said steam, a higher volume/amount of steam is achieved, and a steam exhaust gas mixture, i.e. steamex having a higher fluid, e.g. water, content and a lower temperature, compared to no fluid, e.g. water, injection. As a consequence of the fluid injection the dew point of the mixture is increased substantially. Thus, by varying the amount of fluid injected into the primary chamber the dew point may be varied. Having a high dew point in the steamex offers the advantage that the steamex can "carry" the energy a further distance, as there is a higher fluid, e.g. water, content in the steamex. The efficiency is thus increased. By injecting the fluid, e.g. water, as a mist preferably having a droplet size of less than 10 microns further increases the efficiency.

Further advantageous embodiments are set out in the dependent claims.

### DESCRIPTION OF THE DRAWINGS

A better understanding of the present invention will be had upon the reference to the following detailed description when read in conjunction with the accompanying drawings, wherein like reference characters refer to like parts throughout the several views, and in which:
Fig. 1 schematically shows an elevational view partly in cross section of a device for efficient energy transformation by means of a gaseous medium comprising steam according to a first embodiment of the present invention;
Fig. 2 schematically shows a perspective view of a device for efficient energy transformation by means of a gaseous medium comprising steam according to a second embodiment of the present invention
Fig. 3 schematically shows a method for extinguishing a fire in a coal mine using the device according to fig. 2.
Fig. 4 schematically shows a method for extracting oil in oil sand under ground.

### DETAILED DESCRIPTION OF THE INVENTION

Fig, 1a schematically shows an elevational view partly in cross section of a device for efficient energy transformation by means of a gaseous medium comprising steam.

The device 1 comprises a primary chamber 2, i.e. a combustion chamber, means for burning a fuel such as a burner 3 for burning said fuel, e.g. a gas burner 3, attached to the bottom of said chamber 2, for introducing heat into said chamber 2, and a fluid inlet 4a at the lower part of the chamber 2, for introducing a fluid, e.g. water into a pipe 4, said pipe 4, when located inside the chamber 2, preferably having a helical shape rising upwardly in the chamber, and a steam chamber 6 to the upper part of which the pipe 4 is connected, in which steam chamber 6 fluid, e.g. water is intended to be introduced and boiled. The chamber 6 further comprises an outlet 7, preferably a pipe 7, in the upper part of the steam chamber 6. An end portion of the pipe 7 constitutes a primary injection chamber 7a into which a cold fluid, e.g. water is intended to be injected. Preferably a branch pipe 4b from the pipe 4 is connected to the primary chamber 7a, the pipe 4b having a nozzle 4c at the end arranged such that when fluid such as water is arranged to flow it is sprayed into the primary chamber 7a. The device further comprises a secondary injection chamber 8 having an inner cavity 8a and an outer cavity preferably coaxially surrounding the inner cavity 8a, said chamber 8 being attached to the top of the chamber 2. The primary chamber 7a is connected to the outer cavity 8b of the secondary injection chamber 8. Steam from said primary chamber 7a is intended to be introduced into the outer cavity 8b of the injection chamber 8 via the pipe 7. The exhaust gas is intended to be introduced into the inner part 8a of the injection chamber 8.

The device further comprises a mixing chamber 13 constituting the downstream part of the injection chamber, where steam, via nozzle like holes/openings 13a in the tube dividing the inner cavity 8a and the outer cavity 8b of the injection chamber 8, is intended to be introduced from the outer cavity 8b of the injection chamber 8. Steam and exhaust gases are thus intended to be mixed in the mixing chamber such that a steam and exhaust gas mixture, hereinafter referred to as steamex, is achieved. The device further comprises an outlet 20 for discharging the steamex.

When operated using water as fluid, water is introduced through the pipe flowing in the helical pipe 4 and is pre-heated by means of the burner 3 and then continues to the steam pressure chamber 6 where the water starts to boil and reaches a high pressure. The pressurised steam, steam having a pressure of e.g. 3 Bar, created continues through the pipe 7 via the valve and enters the primary chamber 7a. Water from the pipe 4b is continuously introduced and sprayed into the primary chamber 7a via the nozzle 4c, the water preferably being a mist having a droplet size of less than 10 microns. The steam in the pipe 7 is e.g, approximately 140 °C and the water sprayed into the primary chamber is e.g, approximately 6 °C. The steam and the water mist are mixed in the primary chamber 7a, such that a steam of slightly lower temperature, e.g. approximately 120 °C, but with a higher water content is achieved. The flow is thus increased, depending on the amount of water injected, e.g. from approximately 10 m³/min at 140 °C to e.g. approximately 20 m³/min at 120 °C. The steam with high water content is introduced/flows into the outer cavity 8b of the secondary injection chamber 8 and flows towards the mixing chamber 13. As the steam flows in the outer cavity 8b it is heated by means of the exhaust gas flowing in the inner cavity 8a of the injection chamber 8 towards the mixing chamber 13, the exhaust gas having a temperature of e.g. approximately 600 °C. The steam is heated to a temperature of e.g. 340 °C. and consequently expands correspondingly, As the hot steam enters the mixing chamber it will due to the expansion have a high flow rate. The steam enters the mixing chamber through nozzle like holes/openings 13a in the inner tube dividing the inner and outer cavities, the steam having a high flow mixing with the exhaust gas creating a steam and exhaust gas mixture, or steamex. The holes 13a are configured such that an ejector effect is achieved as the steam projects through the same. The ejection has the effect that the steam lifts the exhaust gases or brings the exhaust gases with the steam as they mix, i.e. has a jet suction effect. A depression is thus created such that the combustion continues, i.e. the burning of the fuel is not extinguished. The mixing chamber 13 has a larger cross sectional area than the inner cavity 8a, preferably a cross sectional area corresponding to the sum of the cross sectional area of the inner and outer cavity 8a, 8b.

An alternative to water as fluid may be oil.

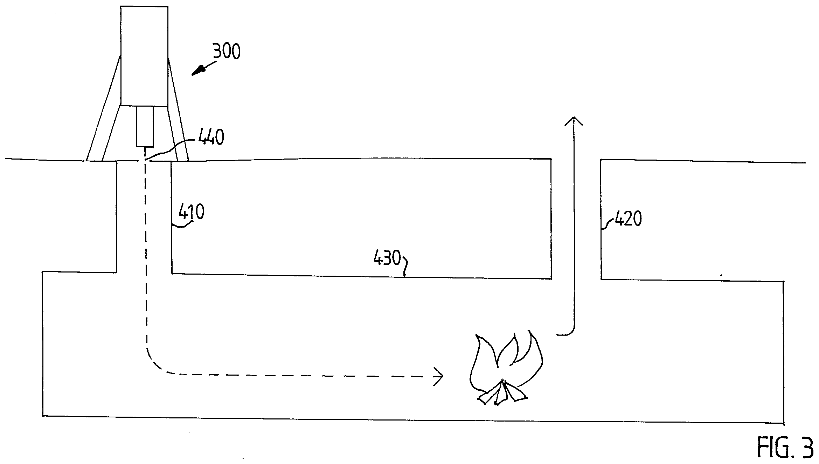

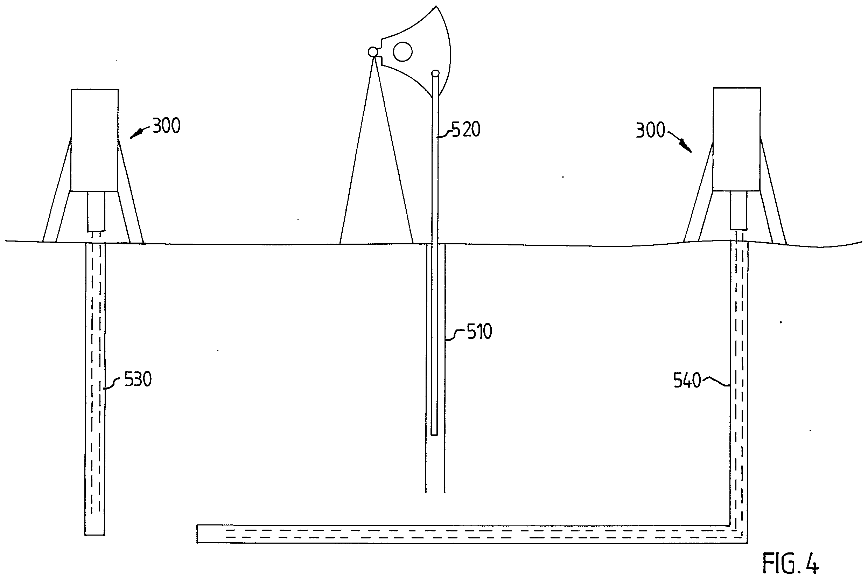

The effect of the water injection, or rather injection of water mist of less than 10 microns, is that a higher volume/amount of steam is achieved, and a steamex having a higher water content, e.g. 96 % instead of e.g. 83 % without water injection and a lower temperature, e.g. 340-380 °C instead of e.g. 450 °C without water injection. As a consequence of the water injection the dew point is increased a lot, e.g. to 88 °C instead of e.g. 65 °C without water injection. Thus, by varying the amount of water mist injected into the primary chamber the dew point may be varied. Having a high dew point in the steamex offers the advantage that the steamex can "carry" the energy a further distance, as there is a higher water content in the steamex. The efficiency of the device is thus increased. There are applications where this effect is advantageous, as will be explained below in conjunction with fig. 3 and 4.

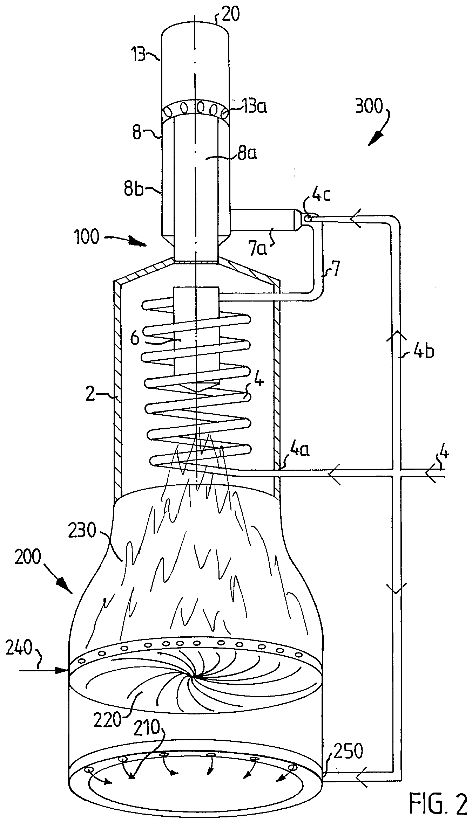

Fig. 2 schematically shows a perspective view of a device 300 for efficient energy transformation by means of a gaseous medium comprising steam according to a second embodiment of the present invention. The device according to the second embodiment is substantially a combination of a gas turbine or the like and the device according to the first embodiment, as will be explained below.

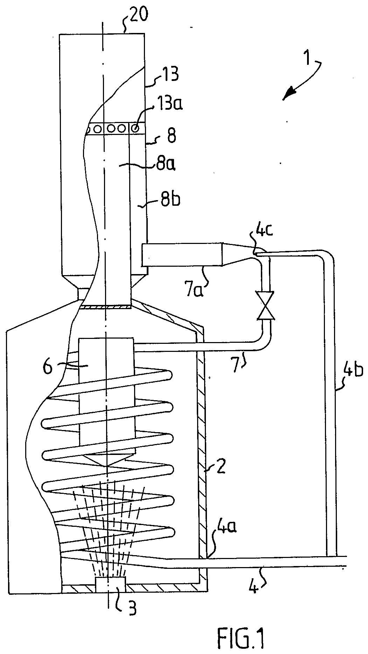

The device according to the second embodiment of the present invention comprises a gas turbine part 200 and a steam/exhaust gas mixture generator part, i.e. a steamex generator part 100. The gas turbine part comprises an air inlet 210, means 220 for sucking air into the gas turbine part such as a fan 220 preferably arranged downstream of the air inlet, a combustion chamber 230 or similar space/cavity, and means for combusting a fuel within said combustion chamber 230, said fuel preferably being arranged to be introduced into the combustion chamber via a fuel inlet 240. Preferably the gas turbine part comprises compressor means arranged to compress the air sucked in through the air inlet. Preferably the gas turbine part comprises a turbine means, e.g. a turbine wheel, arranged to drive said compressor means by means of a portion of the exhaust gas and air produced in the combustion chamber. Preferably the device comprises a constriction means, e.g. a convergent nozzle or the like, arranged to receive the exhaust gas and air, for accelerating said exhaust gas and air through the same in order to increase the flow rate. The gas turbine part could be any kind of gas turbine having any design suitable for producing exhaust gas of high flow rate, the gas turbine being adaptable with the device according to the first embodiment, or similar device intended to produce steamex. In other words the means for burning the fuel which in fig. 1 as an example is constituted by a burner 3, here may be constituted by ignition means in a gas turbine, such that a high flow rate of the exhaust gas produced is achieved. Instead of sucking the air into the air inlet by suction means, an alternative way of introducing air is to blow the air into said air inlet by blowing means.

The steamex generator part comprises an outlet 20, a chamber 2, a fluid inlet 4a at the lower part of the chamber 2, for introducing fluid, e.g. water into a pipe 4, said pipe 4, when located inside the chamber 2, preferably having a helical shape rising upwardly in the chamber, and a steam chamber 6 to the upper part of which the pipe 4 is connected, in which steam chamber 6 fluid, e.g. water is intended to be introduced and boiled. The chamber 6 further comprises an outlet 7, preferably a pipe 7, in the upper part of the steam chamber 6. An end portion of the pipe 7 constitutes a primary injection chamber 7a into which a cold fluid, e.g. water is intended to be injected, Preferably a branch pipe 4b from the pipe 4 is connected to the primary chamber 7a, the pipe 4b having a nozzle 4c at the end arranged such that when fluid such as water is arranged to flow it is sprayed into the primary chamber 7a. The device further comprises a secondary injection chamber 8 having an inner cavity 8a and an outer cavity preferably coaxially surrounding the inner cavity 8a, said chamber 8 being attached to the top of the chamber 2. The primary chamber 7a is connected to the outer cavity 8b of the secondary injection chamber 8. Steam from said primary chamber 7a is intended to be introduced into the outer cavity 8b of the injection chamber 8 via the pipe 7.

The steamex generator part of the device is arranged downstream of the combustion chamber 230 such that the heat from the burning fuel in the combustion chamber heats up the pipe configuration 4 in the chamber 2, into which a fluid, e.g. water is intended to be introduced and flow. The exhaust gas is intended to be introduced into the inner part 8a of the injection chamber 8. Preferably fluid, e.g. water, more preferably fluid mist, e.g. water mist, having a droplet size of less than 10 microns, is arranged to be introduced into the turbine part 200 through a fluid inlet 250 preferably located at the air inlet 210 side of the turbine part 200, such that the mist is mixed with the air. The mist of less than 10 microns is e.g. accomplished by means of a nozzle. This has the advantage that the working temperature in the combustion chamber of the turbine part may be controlled. Further, as the density of the air, i,e. the water content in the air, is increased the evaporation force is increased during combustion. Preferably the air is arranged to be filtered prior to entering the turbine part.

When operated air is continuously introduced, e.g. sucked, into the turbine part 200 through the air inlet 210 by means of e.g. the fan 220. The air is heated in the combustion chamber 230 by means of burning means, such that the air expands. The gas of exhaust gas and air is directed towards the mixing chamber 13 at a high velocity. Preferably the air is compressed by means of compressor means after having been introduced into the air inlet, giving the air a higher pressure. Preferably fuel is injected through the fuel inlet 240 and mixed with the compressed air and is ignited by ignition means internally, i.e. in the combustion chamber 230. Substantially all of the air is heated and expands rapidly. It exhaust as a high velocity gas, i.e. exhaust gas and air, preferably through a constriction means, for example a convergent nozzle, Preferably at least a portion of the gas is directed towards a turbine means, e.g. a blade of a turbine wheel, the energy created being used to drive the compressor means, the remaining portion being directed towards the mixing chamber 13.

When, as en example, using water as fluid, water is continuously introduced through the pipe, flowing in the helical pipe 4 and is pre-heated by means of the burning fuel in the combustion chamber 230 and then continues to the steam pressure chamber 6 where the water starts to boil and reaches a high pressure. The pressurised steam created continues through the pipe 7 via the valve and enters the primary chamber 7a. Water from the pipe 4b is continuously introduced and sprayed into the primary chamber 7a via the nozzle 4c, the water preferably being a mist of less than 10 mitcrons. The steam in the pipe 7 is e.g. approximately 140 °C and the water sprayed into the primary chamber is e.g. approximately 6 °C. The steam and the water mist are mixed in the primary chamber 7a, such that a steam of slightly lower temperature, e.g. approximately 120°C, but with a higher water content is achieved. The flow is thus increased from e.g. approximately 10 m³/min at 140 °C to approximately 20 m³/min. The steam with high water content is introduced/flows into the outer cavity 8b of the secondary injection chamber 8 and flows towards the mixing chamber 13. As the steam flows in the outer cavity 8b it is heated by means of the exhaust gas flowing at a high flow rate in the inner cavity 8a of the injection chamber 8 towards the mixing chamber 13, the exhaust gas, having a temperature of e.g. approximately 600 °C. The steam is heated to a temperature of e.g. 340 °C, and consequently expands correspondingly. As the hot steam enters the mixing chamber it will due to the expansion have a high flow rate. The steam enters the mixing chamber through holes or the like in the inner tube dividing the inner and outer cavities, the steam having a high flow rate mixing with the exhaust gas having a very high flow rate, and hence high pressure when introduced into a cavity, creating a steam and exhaust gas mixture, or steamex, with a very high flow rate/high pressure.

The effect of the fluid, e.g. water injection, or rather injection of fluid, e.g. water mist of less than 10 microns, into the primary chamber 7a is that a higher volume/amount of steam is achieved, and a steamex having a higher water content, e.g. 96 % instead of e.g. 83 % without water injection and a lower temperature, e.g. 340-380 °C instead of e.g. 450°C without water injection. As a consequence of the water injection the dew point is increased a lot, e.g. to 88 °C instead of e.g. 65 °C without water injection. Thus, by varying the amount of water mist injected into the primary chamber the dew point may be varied. Having a high dew point in the steamex offers the advantage that the steamex can "carry" the energy a further distance, as there is a higher water content in the steamex. By means of the gas turbine part, exhaust gas at high pressure/high flow rate is produced, which facilitates transporting the steamex long distances at high velocity/high pressure, where the high dew point of the steamex, i.e. the high water content in the hot steamex the energy content is preserved, i.e. energy losses are reduced. Due to the high pressure and high flow rate achieved, the device facilitates filling up large cavities in short time. There are applications where the above effects are advantageous, as will be explained below, in conjunction with fig. 3 and 4.

The water injected at the water mist inlet 250 may be fed from the same source as the water fed to and injected into the primary injection chamber 7a and the inlet 4a into the chamber 2 of the steamex generator part, or water may be fed from separate sources. Preferably there are control means in order to control the flow of water to the inlets 4a, 7a, 250.

Instead of a gas turbine or gas turbine like device, any kind of means for achieving a high flow rate of exhaust gas for heating steam and be mixed by said steam may be used, such as e.g. a gas generator or the like.

In the same manner as for the gas turbine part of the device according to the second embodiment, shown in fig. 2, any type of gas turbine may be provided with a water injection device intended for injection of water, preferably water mist of less than 10 microns, arranged such that the injected water mist is mixed with the air sucked into the gas turbine such that a cooling effect within the turbine is achieved.

Fig, 3 schematically shows a method for extinguishing a fire in a coal mine using the device according to fig. 2. Fig. 3 thus shows an application for the device according to the second embodiment of the present invention.

Fig. 3 schematically shows a coal mine having two shafts 410, 420 leading to a mine 430 located under ground, the mine constituting a large cavity in which there is a fire. In such a case one of the shafts 420 will function as a gas evacuation for smoke from said fire and in the other shalt 410 oxygen from the ambient air outside will be sucked down, feeding the fire. In order to solve the problem of extinguishing such a fire the device 300 according to the second embodiment is used. The opening of the shaft through which the air is sucked into the mine is arranged to be sealed in such a way that only a small opening 440 is present. The device 300 is arranged in connection to said opening in such a way that steamex produced by the device, the device functioning in the manner described above, may be introduced, the steamex replacing the oxygen sucked down. Due to the high pressure and high flow rate of the steamex, the oxygen is removed/pushed away and the fire is extinguished by the steamex of high water content. The device thus provides a method for extinguishing fires in coal mines or the like from outside of the mine. There is no need to enter the mine.

Similarly fires in oil storage tanks at land or sea may be extinguished by means of the device 300.

Fig. 4 schematically shows a method for extracting oil in oil sand under ground. Fig. 4 schematically shows an oil bore hole 510 into which an oil pump 520 is intended to be introduced in order to pump up oil. When the oil is in the form of oil sand, steam is conventionally introduced into holes 530, 540, e.g. two holes arranged respectively at a distance from the oil bore hole 510 as is suggested in fig. 4. The oil sand, when heated becomes fairly liquid and thus fiends the bore hole from where it is pumped. Instead of applying a conventional steam generator, the device 300 according to the second embodiment is used. A device 300 is arranged respectively over each hole into which steam is intended to be introduced. Alternatively one device could be arranged to supply both holes. The device 300 is arranged in connection to the opening of the holes 530, 540 in such a way that steamex produced by the device, the device functioning in the manner described above, may be introduced. The device 300, as it uses the exhaust gases, is much more efficient, i.e. need much less power compared to conventional steam generators. Further the device produces much more steamex per time unit than steam per time unit produced by a conventional steam generator. Due to the high energy content, i.e. the high dew point/high water content of the produced hot steamex it may be transported far keeping the energy content. The conventional steam generators are used in holes up to 2 km. With the device 300 according to the invention excavation of oil sand at larger depths, e.g. more than 3 km may be achieved.

Preferably, prior to injecting the steamex by means of the device 300, water is arranged to be introduced into the bore holes such that the ground/soil at the bottom of the holes is saturated, i.e. the water has been sucked into the ground such that the ground is wet. When the ground/soil is saturated by water the energy is transferred quicker to the oil such that the excavation becomes more efficient.

According to an embodiment the method comprises the step of prior to mixing the steam with exhaust gas, injecting a fluid into said steam. According to an embodiment of the method the steam in the injection of fluid step is provided under pressure. According to an embodiment of the method the fluid is injected as a mist having a droplet size of less than 10 microns. According to an embodiment of the method the fluid is water.

The device 300 may also be used in other applications. A similar application to the one shown in fig. 4 is for example clearance or decontamination of areas where the ground is contaminated by chemicals, where the chemicals may be heated by means of the steamex produced by the device, which chemicals than may be drained to bore holes and pumped such that they are removed. The device may also be applied in sky scrapers in order to put out fires.

Where temperatures, pressures, efficiencies are mentioned they have been included for the purpose of increasing the intelligibility of the application and are only examples and do consequently not have any limiting effect on the interpretation of each element.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Method for producing a gaseous medium comprising a steam and exhaust gas mixture, and for varying the dew point of said gaseous medium,
said steam being produced from a first fluid medium, energy for heating the first fluid medium being provided by burning a fuel, comprising the step of:
- mixing the steam with exhaust gas from combustion of said fuel;
**characterised by** the step of:
- prior to mixing the steam with exhaust gas, injecting a fluid into said steam, wherein the dew point of the gaseous medium is varied by varying the amount of fluid injected.

2. Method according to claim 1, wherein the steam in the injection of fluid step is provided under pressure.

3. Method according to claim 1 or 2, wherein the fluid is injected as a mist having a droplet size of less than 10 microns.

4. Method according to any of claims 1-3, wherein the fluid is water.

## Patentansprüche

1. Verfahren zur Herstellung eines eine Mischung aus Dampf und Abgas umfassenden gasförmigen Mediums und zum Verändern des Taupunkts des gasförmigen Mediums,
wobei der Dampf aus einem ersten Fluidmedium erzeugt wird, Energie zum Erwärmen des ersten Fluidmediums durch Verbrennen eines Brennstoffs bereitgestellt wird, und es folgenden Schritt umfasst:
- Mischen des Dampfs mit Abgas aus der Verbrennung des Brennstoffs;
**gekennzeichnet durch** folgenden Schritt:
- vor dem Mischen des Dampfs mit Abgas Einspritzen eines Fluids in den Dampf, wobei der Taupunkt des gasförmigen Mediums **durch** Verändern der Menge des eingespritzten Fluids verändert wird.

2. Verfahren nach Anspruch 1, wobei der Dampf im Fluideinspritzschritt unter Druck stehend geliefert wird.

3. Verfahren nach Anspruch 1 oder 2, wobei das Fluid als Nebel mit einer Tröpfchengröße von weniger als 10 Mikrometer eingespritzt wird.

4. Verfahren nach einem der Ansprüche 1 bis 3, wobei das Fluid Wasser ist.

## Revendications

1. Procédé de production d'un milieu gazeux comportant un mélange de vapeur et de gaz d'échappement, ainsi que de modification du point de rosée dudit milieu gazeux,
ladite vapeur étant produite à partir d'un premier milieu fluide, l'énergie pour chauffer le premier milieu fluide étant fournie par combustion d'un combustible, comprenant l'étape consistant à :
- mélanger la vapeur avec du gaz d'échappement provenant de la combustion dudit combustible ;
**caractérisé par** l'étape consistant à :
- avant de mélanger la vapeur avec du gaz d'échappement, injecter un fluide dans ladite vapeur, le point de rosée du milieu gazeux étant modifié en modifiant la quantité de fluide injectée.

2. Procédé selon la revendication 1, dans lequel la vapeur dans l'étape d'injection de fluide est fournie sous pression.

3. Procédé selon la revendication 1 ou 2, dans lequel le fluide est injecté sous forme de brouillard présentant une taille de gouttelette inférieure à 10 micromètres.

4. Procédé selon l'une quelconque des revendications 1 à 3, dans lequel le fluide est de l'eau.
